# EUROPEAN PATENT SPECIFICATION

(11) **EP 1 741 280 B1**
(45) Date of publication and mention of the grant of the patent: **10.12.2008**
(21) Application number: 05716346.1
(22) Date of filing: 24.03.2005
(51) Int. Cl.: G06F 1/16

(54) **METHOD AND CAMERA FOR SIMULATING THE OPTICAL EFFECT OF A LENTICULAR GRID HARDCOPY**
VERFAHREN UND KAMERA ZUM SIMULIEREN DES OPTISCHEN EFFEKTS EINER LINSEN-GITTER-DRUCKAUSGABE
PROCEDE ET CAMERA POUR LA SIMULATION DE L'EFFET OPTIQUE D'UNE COPIE PAPIER DE QUADRILLAGE LENTICULAIRE

(30) Priority: 07.04.2004 FR 0403629
(43) Date of publication of application: 10.01.2007
(73) Proprietor: Eastman Kodak Company, Rochester NY 14650-2201 (US)
(72) Inventor: VAU, Jean-Marie, Kodak Industrie, F-71102 Chalon sur Saone Cedex (FR); TOUCHARD, Nicolas Patrice Bernard, Kodak Ind., F-71102 Chalon sur Saone Cedex (FR); PAPIN, Christophe Edmond Maurice, Kodak Industrie, F-71102 Chalon sur Saone Cedex (FR)
(74) Representative: Weber, Etienne Nicolas
(86) International application number: PCT/EP2005/003137
(87) International publication number: WO 2005/099248

(56) References cited:
- EP-A- 1 130 906
- EP-A- 1 324 587
- WO-A-03/036452
- GB-A- 2 378 878
- US-A- 5 956 083
- US-A- 5 966 167
- US-B1- 6 297 838
- HAMBURGER W R ET AL: "ITSY: STRETCHING THE BOUNDS OF MOBILE COMPUTING" COMPUTER, IEEE COMPUTER SOCIETY, LONG BEACH., CA, US, US, vol. 34, no. 4, April 2001 (2001-04), pages 28-36, XP001103922 ISSN: 0018-9162

## Description

### FIELD OF THE INVENTION

The invention is in the technological field of digital imaging. More particularly the invention relates to a previewing method, to display an image sequence, or part of an image sequence, on the screen of a digital camera, following the capture of the image sequence with the camera. The invention also relates to a digital camera comprising the means to implement the previewing method.

### BACKGROUND OF THE INVENTION

Faced with a growing use of digital cameras, like for example digital cameras or portable phonecams, new behavior and thus new needs are appearing among the users of these devices. Users of portable terminals, like digital cameras, wish to make the most of the principle of WYSIWYG (What You See Is What You Get), which allows them to make rapid captures of animated digital image sequences (video films) and preview of the sequences instantly, before the transfer of the sequence onto a material support. Image sequences can also be sent via a wireless communication network, for example to another addressee user, equipped with a portable terminal, who will also wish to transfer the received sequence onto a material support. The communication of the digital data of these images between the terminals is performed by a wireless network, like GSM (Global System for Mobile) or GPRS (General Packet Radio System). A need linked to the WYSIWYG principle also stems from the growing installation of photographic terminals or kiosks that enable the execution of photographic work, based on captured digital images. The photographic kiosk advantageously enables the rapid printing of the images of a video sequence onto a single material support. Known methods, using lenticular grid hardcopies, thus enable the display of a set of images in a burst (the image sequence) directly on a single lenticular grid hardcopy. This enables the display, by printing a simple tilt of the lenticular grid hardcopy, and according to the amplitude of the tilt, of a part or all the images carried by this lenticular grid hardcopy.

The means for transferring an image sequence onto a lenticular grid support are known in the prior art. US Patent Application 2003/0128287 describes the means to create, based on recorded digital images, lenticular grid cards. The lenticular grid cards or hardcopies enable the viewing of a video image sequence, by tilting said hardcopies. The digital camera described in US Patent Application 2003/0128287 comprises a display screen and control buttons or keys. The control buttons are used to manually select for example a first image and a last image of an image sequence, or of a captured video-clip. The sequence images between the first selected image and the last selected image constitute for example part of the sequence that has a particular interest for the user of the digital camera. The user can scroll through the images by actuating a control button, go backwards by actuating a reverse control, etc., to select a set of images in the image sequence. One problem is that the user has to act on the control buttons or keys. The control buttons can be simple or multi-purpose, and they enable selecting of an image for display, searching for the next image in the sequence, going backwards in the sequence, or scrolling several sequence images rapidly. These user interface means quickly become tedious and unfriendly, especially with repetitive use, where the slowness of the interface means becomes a significant inconvenience to satisfy the WYSIWYG principle sought by the user. Further, the user readily risks not activating the correct control, and, if he/she makes a control error, he/she must restart the manipulation by actuating the correct control, which increases the manipulation time.

Thus it is desirable to be able to easily and rapidly preview image sequences or parts of image sequences, soon after their capture, with a digital camera. This previewing of successive images must be user-friendly; the user-friendliness of this previewing step is all the more wanted as this step is crucial for rapidly deciding, whether to edit or not onto a material support, such as the lenticular grid hardcopy, an image sequence or part of image sequences having an interest for the user or an addressee of these images.

This previewing is advantageous, if the user wishes to launch a printing on a lenticular grid hardcopy. Given the cost of the lenticular grid hardcopy, the user cannot afford to order printings of poor quality lenticular grid hardcopies. Therefore, the previewing step of the image set to print on the lenticular grid hardcopy is essential, before printing said lenticular grid hardcopy, to know if the hardcopy is qualitatively acceptable or not, and thus decide whether to order the printing of this hardcopy or not. Generally, the lenticular grid hardcopy advantageously carries an image set selected in the sequence of images filmed with the digital camera, because all the images composing the sequence are not necessary, as they do not all have the same interest for the user. Further, a limited number of images goes hand-in-hand with the good legibility of the image movement rendered by the lenticular grid hardcopy.

### SUMMARY OF THE INVENTION

It is an object of the invention to remedy the above-mentioned problems of the prior art, by saving the user of a digital camera from repetitively manipulating the manual controls located on the camera. This is to prevent slowness due to the manipulations of the camera's manual controls, and to prevent the risks of errors due to the repetitive manual manipulations of these controls.

It is an object of the invention to be able to easily and rapidly preview the successive images of an image sequence that, for example, has just been captured. Previewing is performed directly using the camera. The previewing is performed by a continuous tilting movement of the camera's display screen, as if one were looking at these successive images when they are carried by a lenticular grid support or hardcopy, and a tilt is printed to said lenticular support. In other words, this previewing simulates an animated image sequence, by producing a rendering that is more or less the rendering obtained by tilting a lenticular grid hardcopy carrying said images. If the display screen is separate from the camera, the screen tilt has to be considered. If the display screen is built into the camera, the tilt of the camera integrating the screen has to be considered.

The invention relates to a previewing method of an image sequence captured by a digital camera, like for example a digital camera or portable phonecam, in order to produce a lenticular grid support or hardcopy. In accordance with the invention, the digital camera has one tilt control. Thus, a set of at least two images of the sequence can be displayed successively on the camera's screen, according to the tilt of the camera's display screen, to simulate a display obtained with the lenticular grid hardcopy carrying said at least two images. The images of the image set are displayed according to an amplitude of tilt of the digital camera's display screen.

The invention method can enable a manual selection, with a manual selection control such as a keyboard of the digital camera, of the image set from among the images of the captured image sequence, for display on the camera's screen.

The invention method can also enable an automatic selection, with an automatic selection control of the digital camera, of the image set from among the images of the captured image sequence, for display on the camera's screen.

The invention method can also enable a printing request to be sent, using a control of the digital camera such as the keyboard, to a lenticular grid hardcopy printing terminal, to produce the lenticular grid hardcopy carrying the image set.

The invention also relates to a digital camera comprising an image sequence capture control, a display screen, characterized in that it also comprises a means sensitive to the tilt of the camera's display screen to supply a tilt signal, and successively display on the screen a set of at least two images of the captured image sequence, according to the tilt signal, so as to simulate a lenticular grid hardcopy carrying said at least two images. Advantageously the digital camera comprises a production control for a lenticular grid hardcopy carrying the images of the displayed image set.

Other characteristics and advantages will appear on reading the following description, with reference to the various figures.

### BRIEF DESCRIPTION OF THE DRAWINGS

Figure 1 represents, in the prior art, an example of the display of an image set on a terminal screen.
Figure 2 represents a first embodiment of the method according to the invention, implemented using a digital phonecam.
Figure 3 represents a second embodiment of the method according to the invention, implemented using a digital phonecam.
Figure 4 schematically represents a lenticular grid hardcopy.

### DETAILED DESCRIPTION OF THE INVENTION

The following description is a detailed description of the main embodiments of the invention with reference to the drawings in which the same numerical references identify the same elements in each of the different figures.

One of the needs of the users of portable digital camera, such as digital cameras or digital phonecams, is to be able to rapidly capture, on the fly, an image sequence, for example a short film or clip (video) that lasts a few seconds, to send to a friend, or to an image album specific to the camera user. One may wish to only select images that are the most representative of the video sequence. For example these are images that represent an interest, in relation to the overall scenario of the filmed sequence, or in relation to a particular passage of the image sequence. It is particularly advantageous to select a limited number images, to obtain a good quality of representation of these images on a lenticular grid support, as the total number of images that can be displayed on a lenticular grid support, due to the lenticular printing method, is in general more or less limited to some thirty images. If the number of images carried by the lenticular grid support is too great, the display, by tilting the support, has mediocre viewing quality, i.e. the dynamic sequence, reproduced by the support when it is tilted, is hardly legible.

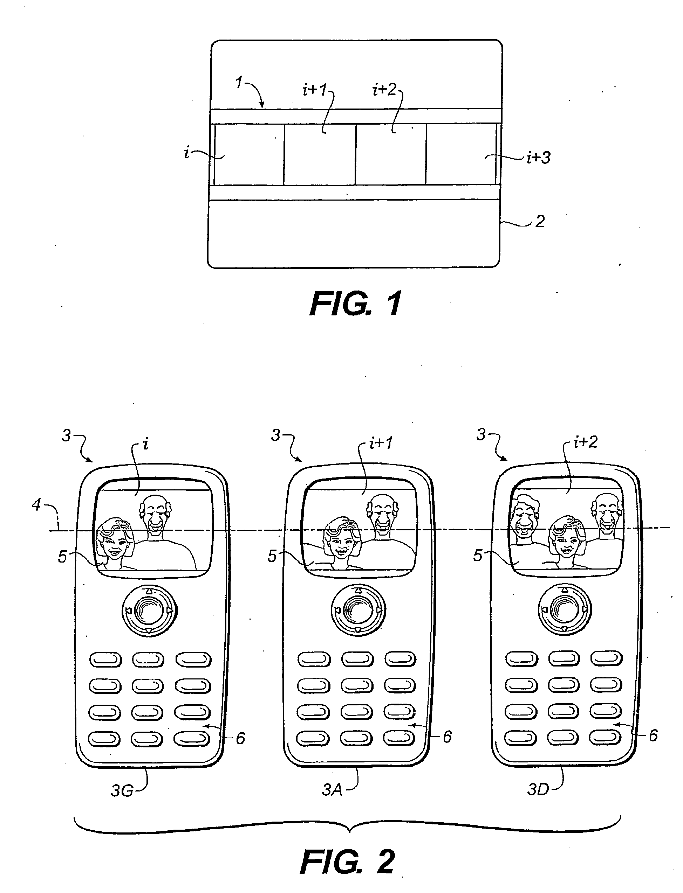

Figure 1 represents an image set i, i+1, i+2, i+3 displayed on a screen 2 of a terminal. These images i, i+1, i+2, i+3 belong to an image sequence 1 of a video film. The image sequence 1 comprises N images (N: whole number), with i greater than or equal to one, and i+3 less than or equal to N. The screen 2 is, for example, the screen of a terminal such as a PC (Personal Computer) onto which the images captured with a digital camera have been loaded. Known means, like for example the Animation Shop software, enable the images of an image sequence to be viewed, and manipulated, to display images representative of the sequence 1, such as images i, i+1, i+2, i+3. An interface means of the PC, for example a scroll button, enables the images of sequence 1 to be run through in the screen 2, and enables the manual selection, for example, of the first image i and the last image i+4 of the image set to be displayed. A disadvantage of these means of the prior art, is that the image set can usually only be viewed by images displayed on the screen 2 of a PC, after the unloading of the filmed sequence onto this PC. The user cannot use the screen of his/her portable camera, because this screen is generally too small to display several images at the same time on the screen, as can be done with the screen 2 of the PC of figure 1.

In general, even if the sequence filmed with the portable camera only lasts a few seconds, or even a few tens of seconds, the content of the filmed sequence usually represents a total of several tens, or even several hundreds of captured images. And the analysis of the sequence with the conventional means presented above, quickly becomes tiresome for the user, by its complexity (use of several terminals, exchanges of image data between these terminals) and by its lack of speed and friendliness in previewing the sequence (scrolling the images with a manual control).

Another important need of portable camera users is to be able to instantaneously edit, instantly, a printing of digital images of a video sequence that has just been captured. This need is felt by the fact of the increasing installation of image printing means. The means that enable the images to be printed are advantageously photographic kiosks. The lenticular grid hardcopy is particularly advantageous for carrying an image set that represents a video sequence showing a movement of an image subject or entity.

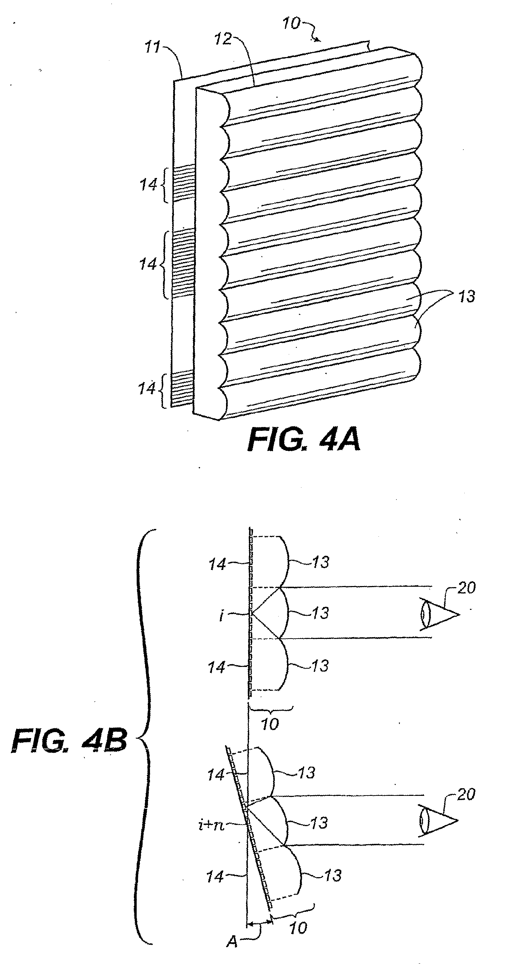

According to figure 4, the lenticular grid hardcopy 10 is generally comprised of a support 11, and a frame 12 of an optical lens grid 13 enabling several successive images to be displayed by tilting the hardcopy, in order to represent a moving image. Preferably the lenticular grid hardcopy 10 is comprised of an opaque plastic support 11 onto which is fixed the frame 12 of adjacent optical lenses 13. The lenses 13 are placed on one side of the support 11, and they cover the adj acent lines 14 that represent separate image data i, i+n recorded on the support 11. According to the amplitude of tilt of the lenticular grid hardcopy 10 in relation to the user, the latter successively views that various images recorded on the support 11. When the user tilts the lenticular grid hardcopy 10, the various images recorded on the support 11 represent a projection of successive images i, i+n perceived by the user's eye 20, like an animated sequence. Between the start of the projection and the end of the projection of the images, the lenticular grid hardcopy 10 is tilted with an amplitude represented by an angle A on figure 4.

According to one advantageous embodiment, the lenticular grid hardcopy is a card with dimensions corresponding to a pocket format, e.g. 85 mm by 55 mm.

However, the digital camera user needs to know, before ordering a printing of the lenticular grid hardcopy, whether the rendering of the display in a burst of the image set is qualitatively acceptable: legibility of the sequence, dissolve (passage or transition from one image to another by tilting the hardcopy). This previewing display is essential, given the significant cost of a lenticular grid hardcopy which must readily present a good quality image set. Otherwise, the method lets the digital camera user correct the proposed sequence, by selecting for example another image set of the sequence.

It is an object of the invention to let the digital camera user to be able to instantly display, simply and easily, following an image sequence capture, the image set he/she will obtain in printing on the lenticular grid hardcopy 10. This is the application of the principle called WYSIWYG (What You See Is What You Get), by previewing the image set, prior to its printing on a material support like the lenticular grid hardcopy. The previewing step can thus enable the previewed image set to be modified, if it does not suit the user, and to do this before printing said image set on the lenticular grid hardcopy.

It is an object of the invention to supply advantageously to the digital camera user, a rapid and easy-to-use means letting him/her simulate the display obtained with the lenticular grid hardcopy carrying the image set, and to do this, before printing said image set. The invention method implements an algorithm that simulates the display of an image set obtained with the lenticular grid hardcopy 10, by tilting the digital camera by an amplitude that corresponds to that of the lenticular grid hardcopy to display the same image set. The invention method enables, by tilting the camera, the successive display (i.e. in a burst) of the images of the image set, on the camera's screen. The camera user thus obtains, with the camera, a simulation of what he/she would obtain with the lenticular grid hardcopy carrying the image set. In other words, in a preferred embodiment, the tilt amplitude of the camera viewing screen to preview the images of the image set as a burst replicates the tilt amplitude required to display the image set, with a lenticular grid hardcopy carrying this image set. But the tilt amplitude of the camera's viewing screen can also be more or less different than the tilt amplitude required to display the image set with a lenticular grid hardcopy carrying this image set.

According to figure 2, the invention method is implemented with a camera that is advantageously a phonecam 3. The phonecam 3 comprises an image sequence capture control, a display screen 5 built into the camera, and a control keyboard 6. The capture control is one of the keyboard control buttons 6. The phonecam 3 comprises, according to the invention, a means sensitive to the tilt of said phonecam 3, to supply a tilt signal. This means sensitive to the tilt of the camera, is advantageously a movement detection sensor housed in the phonecam 3. The sensor to measure the tilt can also be an acceleration sensor (accelerometer) or an optical sensor that can be built into the camera. The tilt signal supplied by the sensor controls the scrolling of the display of the image of the captured sequence. In other words, the display in a burst of the images of the captured sequence depends on the change of value of the tilt signal. The tilting of the phonecam 3 produces a variation of the tilt signal that triggers a display of images of the sequence synchronized with the signal variation. The phonecam 3 is equipped with an image sensor, and the algorithm of the previewing method of the invention links the video signal data supplied by the image sensor with the tilt signal supplied by the movement detection sensor to produce a user interface. This interface enables a display constituting a preview that is a replication (i.e. simulation) of the sensation the user would have, by tilting the phonecam 3, if he/she held a lenticular grid hardcopy 10 carrying the images that he/she previews in simulation on the screen 5. This previewing step of many images satisfies the WYSIWYG principle, by letting the user of the phonecam 3 simulate what he/she would obtain if the images were reproduced on a lenticular grid hardcopy: if the previewing result displayed on the screen 5 by tilting the phonecam 3 is satisfactory, the user can order, using the keyboard 6 of the phonecam 3, a production of a lenticular grid hardcopy carrying the images of the displayed image set. In an advantageous embodiment, the production of a lenticular grid hardcopy is ordered at a photographic kiosk capable of producing lenticular grid hardcopies. Communication between the phonecam 3 and the photographic kiosk is advantageously ensured by a Bluetooth or Wifi type wireless link.

The method enables a previewing of at least two images of an image sequence, as the interest of the previewing is to make a simulation of the display of the images giving a sensation of image movement, like on a lenticular grid hardcopy. Whereas the lenticular grid hardcopy acts to display at least two images representing an image movement; otherwise, it is of no interest.

Figure 2 represents, in space, three positions 3A, 3D, 3G, of the phonecam 3. The phonecam 3 user films a sequence ofN images. In a particular embodiment, he/she can, for example, manually select, with an appropriate interface selection control, and using the keyboard 6 of the phonecam 3, an image set intended to be displayed on the screen 5, from among the N images of the initial filmed sequence. Or, in another preferred embodiment, selection of the image set is performed automatically, by the activation of an algorithm that preferably takes into account, the total number N of images of the sequence, the analysis of the movements and areas of interest among the successive images making up the sequence, and the quality of the respective images of the sequence. The selection of an image set whose number is less than the total number N of images of the sequence, and having a special interest for the user, is favorable to the correct display of the image set on a lenticular grid hardcopy. The reason is that lenticular grid hardcopies can only display a limited number of images; otherwise, the rendering of the display is partially, or even totally, visually unusable. In a preferred embodiment, the image set to be displayed preferably comprises between 2 and 30 images. Of course, the number N of images of the sequence is usually more; for example one may have filmed a sequence ofN = 100 or 150 images.

According to a preferred embodiment, the algorithm automatically selects, for example a set of 2 to 30 representative images, from among the 100 or 150 images of the initial sequence. The selected image set can thus be displayed on a lenticular grid hardcopy, giving good legibility of image movement.

According to figure 2, from the first position 3A of the phonecam 3 enabling an image i+1 of the image set to be displayed, if the user tilts the phonecam 3 forwards to the second position 3G, image i+1 automatically disappears, to let image i appear on the screen 5. Image i is the image preceding image i+1, in the selection performed by the algorithm to obtain the image set. If, however, from the first position 3A of the phonecam 3 enabling an image i+1 to be displayed, the user tilts the phonecam 3 backwards to the third position 3D, image i+1 automatically disappears, to let image i+2 appear on the screen 5. Image i+1 is the image preceding image i+2, in the selection performed by the algorithm to obtain the image set. In a variant of this embodiment, the phonecam 3 can also be tilted backwards to go from image i+1 to image i, and the phonecam 3 tilted forwards to go from image i+1 to image i+2. The tilt corresponds to a rotation of the phonecam 3 around a main axis 4 of the screen 5. Figure 2 corresponds to an embodiment in which the lenses 13 of the lenticular grid hardcopy 10 corresponding to the display previewed on the screen 5 are placed on the hardcopy 10 in one direction (parallel to the axis 4) that enables the display of the images on the hardcopy 10, by tilting said hardcopy forwards or backwards or visa versa.

The images of the image set are displayed on the screen 5, according to a tilt amplitude of the phonecam 3. In a preferred embodiment, the tilt amplitude of the phonecam 3 to display all the images of the image set on the screen 5 equals the tilt amplitude of the lenticular grid hardcopy enabling all the images of said image set to be displayed, if these images were carried by the lenticular grid hardcopy.

According to figure 4, the tilt amplitude of the phonecam 3 to display all the images of the image set on the screen 5 preferably corresponds to an angle A between 20 and 60 degrees. The previewing method of the invention enables the sequence of images to be animated in a loop. In other words, the tilt, according to angle A, of the phonecam 3, enables the sequence to be animated to display the image set, and if the phonecam 3 is tilted beyond the angle A, the display sequence repeats from the start, like on a lenticular grid.

The invention method can thus enable, after the display of the image set on the screen 5, a printing request to be sent, using a control of the phonecam 3 such as the keyboard 6, to a lenticular grid hardcopy printing terminal, to produce the lenticular grid hardcopy 10 carrying the image set. The lenticular grid hardcopy printing terminal is advantageously a photographic kiosk. Clearly the images of the image set can contain image data and text data.

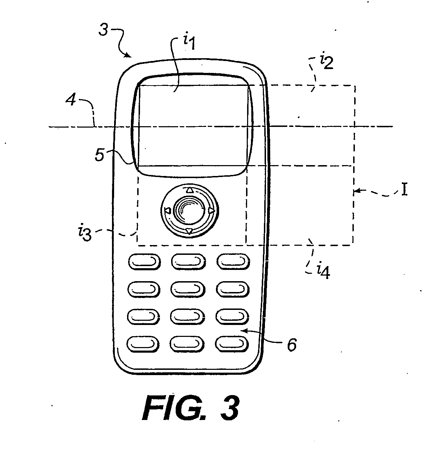

Figure 3 represents a second embodiment of the invention. The algorithm performs, in an image I of an image sequence or image set forming part of the image sequence, a selection of parts of image i₁, i₂, i₃, i₄ of the captured image sequence comprising interest zones, to form the image set to be displayed. The displayed image part i₁ represents an interest zone of the image I that contains, for example, a first person's face; the image part i₂ represents another interest zone of the image I that contains, for example, a second face:

The display of image parts i₁, i₂, i₃, i₄ is performed, from the display of the first image part i₁, by tilting the phonecam 3, for example to the right (or to the left) to display the second image part i₂; the image part i₂ gradually appears, while the image part i₁ disappears from the screen 5. From the display of the first image part i₁, the third image part i₃ gradually appears when the phonecam 3 is tilted, for example, forwards (or backwards), while the image part i₁ gradually disappears from the screen 5. Then, from the display of the image part i₃, the fourth image part i₄ can be made to appear, by tilting, for example, the phonecam 3 to the right (or to the left), from the display of the image part i₃. Tilting the phonecam 3 forwards or backwards corresponds to a rotation around the main axis 4 of the screen 5. The image I can be cut up into as many image parts as there are interest zones present in said image I.

When the phonecam 3 is tilted, the transition from one image to another can occur suddenly, but a dissolve algorithm advantageously enables passing from one image to another to be gradual. Image dissolving thus better imitates the rendering of the lenticular grid.

The embodiments presented enable an image set to be selected for easy previewing (without manual controls) in a burst (rapidly). Previewing in a burst is performed by tilting the camera to the right or left, forwards or backwards, so as to make adjacent images of the image set appear automatically. This user-friendly previewing step lets the user, who wishes to order instantly a printing of the image set on a lenticular grid hardcopy, see what he/she will obtain, by besides having tested all the simulation, as the amplitude of the movement to be made with the camera to display all the images of the image set is more or less the amplitude of movement to be made to display all the images of the image set with the lenticular grid hardcopy carrying said images. The simulation obtained using the means of the invention is based on previewing, to enable the evaluation of the quality of the sequence or selected animated part of sequence, and thus the opportunity to order a production of this sequence on a lenticular grid hardcopy.

## Claims

1. A method of previewing an image sequence captured by a digital camera (3), like for example a portable digital camera or phonecam, with a view to the production of a lenticular grid hardcopy (10), **characterized in that** successively displayed, on a screen (5) of the camera (3), is a set of at least two images (i, i+1, i+2) of the sequence, according to the tilt of the camera's viewing screen, to simulate a display obtained with the lenticular grid hardcopy (10) carrying said at least two images.

2. A method according to claim 1, **characterized in that** it also offers a possibility of manual selection, using a manual selection control such as a keyboard (6) of the digital camera (3), of the image set from among the images of the sequence of captured images, for display on the screen (5) of the camera (3).

3. A method according to claim 1, **characterized in that** it also comprises an automatic selection, using an automatic selection control of the digital camera (3), of the image set from among the images of the sequence of captured images, for display on the screen (5) of the camera (3).

4. A method according to claim 1, **characterized in that**, in the sequence of captured images, a selection of image parts (i₁, i₂, i₃, i₄) comprising interest zones is performed to form the image set to be displayed.

5. A method according to claim 1, **characterized in that** the image set to be displayed preferably comprises between 2 and 30 images.

6. A method according to claim 1, **characterized in that** the images of the image set is displayed according to a tilt amplitude (A) of the digital camera (3).

7. A method according to claim 1, **characterized in that** after the display of the image set, a printing request is sent in response to a command entered on a control of the digital camera (3) such as the keyboard (6), the printing request being transmitted to a lenticular grid hardcopy printing terminal, to produce the lenticular grid hardcopy (10) carrying the image set.

8. A method according to claim 7, **characterized in that** the images of the image set comprise image data and text data.

9. A digital camera (3) comprising an image sequence capture control, a display screen (5), **characterized in that** it also comprises a means sensitive to the tilt of the camera to supply a tilt signal, and successively display on the screen (5) a set of at least two images (i, i+1, i+2) of the captured image sequence, according to the tilt signal, so as to simulate a lenticular grid hardcopy (10) carrying said at least two images.

10. A digital camera according to claim 9, **characterized in that** the means sensitive to the camera's tilt is a movement sensor housed in the camera.

11. A digital camera according to claim 9, **characterized in that** it also comprises an interface to select an image set in the captured image sequence.

12. A digital camera according to claim 9, **characterized in that** it also comprises an automatic selection means of an image set in the captured image sequence.

13. A digital camera according to claim 9, **characterized in that** it comprises a production control for a lenticular grid hardcopy carrying the images of the displayed image set.

## Patentansprüche

1. Verfahren zum Vorbetrachten einer von einer Digitalkamera (3) wie etwa einer tragbaren Digitalkamera oder einer Handykamera aufgenommenen Bildsequenz im Hinblick auf das Erzeugen eines Linsenrasterausdrucks (10),
**dadurch gekennzeichnet, dass**
auf einem Display (5) der Kamera (3) ein Satz aus mindestens zwei Bildern (i, i+1, i+2) der Sequenz nacheinander angezeigt wird entsprechend der Neigung des Kameradisplays, um eine Anzeige zu simulieren, die mit dem die mindestens zwei Bilder enthaltenden Linsenrasterausdruck (10) erhalten wird.

2. Verfahren nach Anspruch 1, **dadurch gekennzeichnet, dass** unter Verwendung einer manuellen Auswahlsteuerung wie z. B. einem Tastenfeld (6) der Digitalkamera (3) der Bildersatz aus aufgenommenen Bildern der Bildsequenz manuell derart auswählbar ist, dass sie auf dem Display (5) der Kamera (3) angezeigt werden können.

3. Verfahren nach Anspruch 1, **dadurch gekennzeichnet, dass** unter Verwendung einer automatischen Auswahlsteuerung der Digitalkamera (3) der Bildersatz aus aufgenommenen Bildern der Bildsequenz automatisch derart auswählbar ist, dass sie auf dem Display (5) der Kamera (3) angezeigt werden können.

4. Verfahren nach Anspruch 1, **dadurch gekennzeichnet, dass** in der Sequenz aufgenommener Bilder eine Auswahl von Teilbildern (i₁, i₂, i₃, i₄) mit Bereichen von Interesse vorgenommen wird, um den anzuzeigenden Bildersatz zu erstellen.

5. Verfahren nach Anspruch 1, **dadurch gekennzeichnet, dass** der anzuzeigende Bildersatz vorzugsweise 2 bis 30 Bilder umfasst.

6. Verfahren nach Anspruch 1, **dadurch gekennzeichnet, dass** die Bilder des Bildersatzes gemäß einer Neigungsamplitude (A) der Digitalkamera (3) angezeigt werden.

7. Verfahren nach Anspruch 1, **dadurch gekennzeichnet, dass** nach der Anzeige des Bildersatzes ein Druckauftrag gemäß einem in eine Steuerung der Digitalkamera (3) wie z. B. dem Tastenfeld (6) eingegebenen Befehl gesendet wird, wobei der Druckauftrag zum Druckterminal für einen Linsenrasterausdruck übertragen wird, um den Linsenrasterausdruck (10) zu erzeugen, welcher den Bildersatz enthält.

8. Verfahren nach Anspruch 7**, dadurch gekennzeichnet, dass** die Bilder des Bildersatzes Bilddaten und Textdaten enthalten.

9. Digitalkamera (3) mit einer Bildsequenz-Aufnahmesteuerung und einem Display (5),
**dadurch gekennzeichnet, dass**
sie ein Mittel umfasst, das auf die Neigung der Kamera reagiert, um ein Neigungssignal zu erzeugen, und dass sie nacheinander auf dem Display (5) einen Satz aus mindestens zwei Bildern (i, i+1, i+2) der aufgenommenen Bildsequenz entsprechend dem Neigungssignal anzeigt, um einen Linsenrasterausdruck (10) zu simulieren, der die mindestens zwei Bilder enthält.

10. Digitalkamera nach Anspruch 9, **dadurch gekennzeichnet, dass** das Mittel, das auf die Neigung der Kamera reagiert, ein Bewegungssensor ist, der in der Kamera angeordnet ist.

11. Digitalkamera nach Anspruch 9, **dadurch gekennzeichnet, dass** sie eine Schnittstelle umfasst zum Auswählen eines Bildersatzes in der aufgenommenen Bildsequenz.

12. Digitalkamera nach Anspruch 9, **dadurch gekennzeichnet, dass** sie Mittel zum automatischen Auswählen eines Bildersatzes in der aufgenommenen Bildsequenz aufweist.

13. Digitalkamera nach Anspruch 9, **dadurch gekennzeichnet, dass** sie eine Steuerung zum Erzeugen eines Linsenrasterausdrucks umfasst, der die Bilder des angezeigten Bildersatzes enthält.

## Revendications

1. Procédé de prévisualisation d'une séquence d'images capturées par un appareil de prise de vues numérique (3), tel que par exemple un appareil de prise de vues numérique portable ou un appareil de prise de vues sur un téléphone portable, en vue de la production d'une copie permanente à grille lenticulaire (10), **caractérisé en ce qu'**est successivement affiché, sur un écran (5) de l'appareil de prise de vues (3), un ensemble d'au moins deux images (i, i+1, i+2) de la séquence, conformément à l'inclinaison de l'écran de visualisation de l'appareil de prise de vues, pour simuler un affichage obtenu avec la copie permanente à grille lenticulaire (10) portant lesdites au moins deux images.

2. Procédé selon la revendication 1, **caractérisé en ce qu'**il offre également une possibilité de sélection manuelle, utilisant une commande de sélection manuelle telle qu'un clavier (6) de l'appareil de prise de vues numérique (3), de l'ensemble d'images parmi les images de la séquence d'images acquises, en vue d'un affichage sur l'écran (5) de l'appareil de prise de vues (3).

3. Procédé selon la revendication 1, **caractérisé en ce qu'**il comprend également une sélection automatique, utilisant une commande de sélection automatique de l'appareil de prise de vues numérique (3), de l'ensemble d'images parmi les images de la séquence d'images acquises, en vue d'un affichage sur l'écran (5) de l'appareil de prise de vues (3).

4. Procédé selon la revendication 1, **caractérisé en ce que**, dans la séquence d'images acquises, une sélection de parties d'images (i₁, i₂, i₃, i₄) comprenant des zones d'intérêt est exécutée pour former l'ensemble d'images à afficher.

5. Procédé selon la revendication 1, **caractérisé en ce que** l'ensemble d'images à afficher comprend de préférence entre 2 et 30 images.

6. Procédé selon la revendication 1, **caractérisé en ce que** les images de l'ensemble d'images sont affichées conformément à une amplitude d'inclinaison (A) de l'appareil de prise de vues numérique (3).

7. Procédé selon la revendication 1, **caractérisé en ce qu'**après l'affichage de l'ensemble d'images, une demande d'impression est envoyée en réponse à un ordre entré sur une commande de l'appareil de prise de vues numérique (3) telle que le clavier (6), la demande d'impression étant transmise à un terminal d'impression de copie permanente à grille lenticulaire, pour produire la copie permanente à grille lenticulaire (10) portant l'ensemble d'images.

8. Procédé selon la revendication 7, **caractérisé en ce que** les images de l'ensemble d'images comprennent des données d'image et des données de texte.

9. Appareil de prise de vues numérique (3) comprenant une commande d'acquisition de séquence d'images, un écran d'affichage (5), **caractérisé en ce qu'**il comprend également un moyen répondant à l'inclinaison de l'appareil de prise de vues pour fournir un signal d'inclinaison, et afficher successivement sur l'écran (5) un ensemble d'au moins deux images (i, i+1, i+2) de la séquence d'images acquises, conformément au signal d'inclinaison, de manière à simuler une copie permanente à grille lenticulaire (10) portant lesdites au moins deux images.

10. Appareil de prise de vues numérique selon la revendication 9, **caractérisé en ce que** le moyen répondant à l'inclinaison de l'appareil de prise de vues est un capteur de mouvement logé dans l'appareil de prise de vues.

11. Appareil de prise de vues numérique selon la revendication 9, **caractérisé en ce qu'**il comprend également une interface pour sélectionner un ensemble d'images dans la séquence d'images acquises.

12. Appareil de prise de vues numérique selon la revendication 9, **caractérisé en ce qu'**il comprend également un moyen de sélection automatique d'un ensemble d'images dans la séquence d'images acquises.

13. Appareil de prise de vues numérique selon la revendication 9, **caractérisé en ce qu'**il comprend une commande de production pour une copie permanente à grille lenticulaire portant les images de l'ensemble d'images affiché.
